(19) Europäisches Patentamt / European Patent Office / Office européen des brevets

(11) **EP 3 903 184 B1**

(12) **FASCICULE DE BREVET EUROPEEN**

(45) Date de publication et mention
de la délivrance du brevet:
**30.08.2023 Bulletin 2023/35**

(21) Numéro de dépôt: **19828797.1**

(22) Date de dépôt: **27.12.2019**

(51) Classification Internationale des Brevets (IPC):
*G06F 8/65* $^{(2018.01)}$ *G06F 9/445* $^{(2018.01)}$
*G06F 21/57* $^{(2013.01)}$ *G06F 21/60* $^{(2013.01)}$
*G06F 21/62* $^{(2013.01)}$

(52) Classification Coopérative des Brevets (CPC):
**G06F 8/65; G06F 9/44505; G06F 21/6218**

(86) Numéro de dépôt international:
**PCT/EP2019/087108**

(87) Numéro de publication internationale:
**WO 2020/136266 (02.07.2020 Gazette 2020/27)**

(54) **PROCÉDÉ ET SYSTÈME DE MAINTENANCE ASSISTÉE PAR ORDINATEUR**

VERFAHREN UND SYSTEM FÜR COMPUTERUNTERSTÜTZTE WARTUNG

METHOD AND SYSTEM FOR COMPUTER-ASSISTED MAINTENANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2018 FR 1874304**

(43) Date de publication de la demande:
**03.11.2021 Bulletin 2021/44**

(73) Titulaire: **Viaccess**
**92400 Courbevoie (FR)**

(72) Inventeur: **PELAGE, Pérez**
**78670 MEDAN (FR)**

(74) Mandataire: **Lavoix**
**2, place d'Estienne d'Orves**
**75441 Paris Cedex 09 (FR)**

(56) Documents cités:
**WO-A1-2018/052444      US-A1- 2018 340 411**

• **WU DAZHONG ET AL: "Cybersecurity for digital manufacturing", JOURNAL OF MANUFACTURING SYSTEMS, SOCIETY OF MANUFACTURING ENGINEERS, DEARBORN, MI, US, vol. 48, 4 avril 2018 (2018-04-04), pages 3-12, XP085479446, ISSN: 0278-6125, DOI: 10.1016/J.JMSY.2018.03.006**

**Description**

La présente invention concerne un procédé et un système de maintenance assistée par ordinateur d'un dispositif à maintenir.

L'invention se situe dans le domaine de la fabrication assistée par ordinateur, et en particulier de la fabrication de pièces à partir de modèles tridimensionnels obtenus par conception assistée par ordinateur.

Dans le domaine de la fabrication assistée par ordinateur il y a, d'une part, la fabrication additive, par exemple l'impression 3D, qui consiste à fabriquer une pièce par dépôt de couches successives d'un ou plusieurs matériaux prédéterminés, et d'autre part, la fabrication soustractive, dans laquelle une pièce 3D est fabriquée par enlèvement de matière à partir d'un bloc de matériau.

De plus, la fabrication assistée par ordinateur englobe la fabrication matérielle d'objets physiques et la fabrication dite virtuelle, consistant à générer un jumeau numérique d'un objet physique. Le jumeau numérique d'un objet physique est un objet numérique, simulant l'objet physique dans un système informatique, ayant la même forme et les mêmes propriétés physiques, et est utilisé par exemple pour tester des propriétés de performance et de robustesse de l'objet avant sa fabrication matérielle effective, ou pour effectuer de la maintenance prédictive de la pièce fabriquée ou à fabriquer elle-même, ou de sa machine de fabrication. Ainsi, au cours de l'exploitation de la pièce physique après qu'elle ait été fabriquée, son jumeau numérique est enrichi au fil de l'eau avec des données opérationnelles de la pièce physique. Ces données opérationnelles sont reçues de la pièce elle-même ou de son environnement d'exploitation, qui les obtient grâce à des capteurs dont elle (il) est équipé(e) à cet effet.

La fabrication virtuelle est avantageuse notamment dans des phases de prototypage industriel, où elle permet de diminuer les coûts de fabrication en évitant la fabrication de multiples prototypes coûteux. Elle est également avantageuse à des fins de maintenance prédictive, au titre de laquelle elle permet d'anticiper l'occurrence de défauts ou défaillances, et donc le besoin d'interventions de maintenance d'un dispositif à maintenir qui est la pièce fabriquée ou à fabriquer elle-même, ou un dispositif de fabrication. Elle permet alors également de tester et valider la teneur de ces interventions en termes d'actions ou commandes d'exploitation, ou d'autres consignes, par exemple.

La fabrication assistée par ordinateur nécessite la mise au point de nombreux paramètres, incluant des paramètres physiques des matériaux utilisés pour la fabrication, des paramètres de fonctionnement des machines de fabrication, des paramètres d'environnement de fabrication (pression, température), des plages de valeurs acceptables pour les divers paramètres, des valeurs par défaut de ces paramètres.

Tous ces paramètres sont appelés paramètres opérationnels. Des valeurs des paramètres opérationnels, appelées données opérationnelles, sont mémorisées au fur et à mesure de l'exploitation, en vue notamment d'opérations de maintenance prédictive ou corrective.

Certaines données opérationnelles sont considérées comme confidentielles par un exploitant d'un système en exploitation, car elles renferment un savoir-faire industriel.

Les opérations de maintenance sont effectuées par un tiers spécialisé, qui peut, en pratique, être différent de l'exploitant du système en exploitation.

La demande de brevet US2018/340411 A1 décrit un système de supervision qui comprend un système de validation par jumeau numérique (« digital twin validation »).

La demande de brevet WO2018/052444 A1 décrit un procédé de sécurisation des données numériques représentant des objets 3D.

L'article « Cybersecurity for digital manufacturing » de Wu Dazhong et al, publié dans Journal of Manufacturing Systems, vol. 48, 4 avril 2018, traite de la sécurisation de la fabrication d'objets par imprimantes 3D par rapport à des cyber-attaques.

Il est souhaitable de prévoir un système de maintenance assistée par ordinateur qui permet de protéger les données opérationnelles de cet exploitant.

A cet effet, l'invention propose un procédé de maintenance assistée par ordinateur d'un dispositif à maintenir, comportant une mémorisation dans un premier système, mise en oeuvre au fur et à mesure de l'exploitation d'un système en exploitation comportant le dispositif à maintenir, de données opérationnelles associées audit système en exploitation, comportant la mise en oeuvre d'un traitement de maintenance dans un deuxième système, lesdits premier et deuxième système étant adaptés à communiquer l'un avec l'autre selon un protocole de communication. Ce procédé comporte, pour un traitement de maintenance identifié par un identifiant de traitement de maintenance à mettre en oeuvre par le deuxième système en appliquant un algorithme de traitement de maintenance sur un ensemble de données opérationnelles pour obtenir au moins une information de maintenance prédictive ou corrective dudit dispositif à maintenir, des étapes consistant à :

- obtenir un algorithme de traitement de maintenance modifié calculé par un cryptosystème homomorphe ou partiellement homomorphe, pour permettre d'obtenir, sans mettre en oeuvre d'opération cryptographique, ladite au moins une information de maintenance prédictive ou corrective sous forme chiffrée, à partir d'un ensemble de données opérationnelles protégées comportant un premier sous-ensemble de données dudit ensemble des données opérationnelles chiffrées par un procédé de chiffrement du cryptosystème homomorphe ou partiellement homomorphe, et un deuxième sous-ensemble de données en clair dudit ensemble des données opérationnelles,

- mettre en oeuvre ledit algorithme de traitement de maintenance modifié sur le deuxième système à partir d'un premier sous-ensemble de données opérationnelles chiffrées et d'un deuxième sous-ensemble de données opérationnelles en clair obtenus du premier système.

Avantageusement, le procédé de maintenance assistée par ordinateur selon l'invention permet de maintenir la connaissance de l'ensemble des données opérationnelles dans un premier système, dit système de protection des données opérationnelles, mis en oeuvre par un premier acteur, par exemple l'exploitant du dispositif à maintenir, et de fournir une partie des données opérationnelles, considérées comme confidentielles, sous forme d'un premier sous-ensemble de données chiffrées à un deuxième système, dit système de maintenance, mis en oeuvre par un tiers dit acteur de maintenance. Avantageusement l'acteur de maintenance n'a pas accès aux données opérationnelles confidentielles mais peut néanmoins effectuer un traitement de maintenance.

Le procédé de maintenance selon l'invention peut présenter une ou plusieurs des caractéristiques ci-dessous, prises indépendamment ou selon toutes les combinaisons acceptables.

Le procédé comporte en outre, suite à la mise en oeuvre de l'algorithme de traitement de maintenance modifié, une transmission de ladite au moins une information de maintenance prédictive ou corrective sous forme chiffrée au premier système.

La mise en oeuvre de l'algorithme de traitement de maintenance modifié, comporte les étapes suivantes mises en oeuvre par le deuxième système :

- réception d'une requête de maintenance d'un dispositif à maintenir ;
- obtention d'un identifiant de traitement de maintenance à mettre en oeuvre,
- formulation d'une requête d'obtention de données opérationnelles du système en exploitation pour la maintenance du dispositif à maintenir selon le traitement de maintenance identifié, et envoi de ladite requête au premier système, ladite requête comprenant au moins un identifiant du traitement de maintenance à appliquer.

La mise en oeuvre de l'algorithme de traitement de maintenance modifié comporte les étapes suivantes, mises en oeuvre par le premier système :

- réception d'une requête d'obtention de données opérationnelles identifiant un traitement de maintenance en provenance du deuxième système,
- obtention de l'ensemble de données opérationnelles relatives au système en exploitation utiles pour effectuer le traitement de maintenance identifié,
- séparation dudit ensemble de données opérationnelles en un premier sous-ensemble de données confidentielles et un deuxième sous-ensemble de données non confidentielles,
- chiffrement, au moyen du module de chiffrement du cryptosystème homomorphe ou partiellement homomorphe, des données du premier sous-ensemble de données,
- transmission du premier sous-ensemble de données chiffrées et du deuxième sous-ensemble de données en clair au deuxième système.

Le procédé comporte une étape préalable d'obtention et de mémorisation d'une paire de clés cryptographiques par ledit premier système, à utiliser par ledit cryptosystème pour effectuer un chiffrement et un déchiffrement.

L'obtention d'un algorithme de traitement de maintenance modifié, mise en oeuvre par ledit premier système, comporte :

- une partition de l'ensemble de données opérationnelles associées au traitement de maintenance identifié en un premier sous-ensemble de données confidentielles et un deuxième sous-ensemble de données non confidentielles,
- un calcul de l'algorithme de traitement de maintenance modifié à partir de l'algorithme de traitement de maintenance, en fonction de la partition des données opérationnelles et d'au moins une clé de la paire de clés cryptographiques.

Chacun des premier et deuxième sous-ensemble de données a un cardinal associé, et le procédé comporte, suite à une requête d'optimisation calculatoire en provenance du deuxième système, une itération par le premier système des étapes de partition et de calcul de l'algorithme de traitement de maintenance modifié, comportant lors de l'étape de partition une réduction du cardinal du premier sous-ensemble de données.

Le procédé comporte en outre une transmission de l'algorithme de traitement de maintenance modifié du premier système au deuxième système.

Le premier système est configuré pour maintenir à jour et mémoriser un jumeau numérique du dispositif à maintenir.

Selon un autre aspect, l'invention concerne un système de maintenance assistée par ordinateur d"un dispositif à maintenir, comportant un premier système adapté à mémoriser, au fur et à mesure de l'exploitation d'un système en exploitation comportant le dispositif à maintenir, de données opérationnelles associées audit système en exploitation, et un deuxième système adapté à mettre en oeuvre un traitement de maintenance, lesdits premier et deuxième système étant adaptés à communiquer l'un avec l'autre selon un protocole de communication. Ce système comporte, pour un traitement de maintenance identifié par un identifiant de traitement de maintenance à mettre en oeuvre par le deuxième système en appliquant un algorithme de traitement de maintenance sur un ensemble de données opérationnelles pour obtenir au moins une information de maintenance prédictive ou corrective dudit dispositif à maintenir, des modules configurés pour :

- calculer par un cryptosystème homomorphe ou partiellement homomorphe, un algorithme de traitement de maintenance modifié pour permettre d'obtenir, sans mettre en oeuvre d'opération cryptographique, ladite au moins une information de maintenance prédictive ou corrective sous forme chiffrée, à partir d'un ensemble de données opérationnelles protégées comportant un premier sous-ensemble de données dudit ensemble des données opérationnelles chiffrées par un module de chiffrement du cryptosystème homomorphe ou partiellement homomorphe, et un deuxième sous-ensemble de données en clair dudit ensemble des données opérationnelles,
- mettre en oeuvre ledit algorithme de traitement de maintenance modifié sur le deuxième système à partir d'un premier sous-ensemble de données opérationnelles chiffrées et d'un deuxième sous-ensemble de données opérationnelles en clair obtenus du premier système.

Selon une caractéristique avantageuse, le premier système comporte un module configuré pour réaliser :

- une partition de l'ensemble de données opérationnelles associées au traitement de maintenance identifié en un premier sous-ensemble de données confidentielles et un deuxième sous-ensemble de données non confidentielles,
- un calcul de l'algorithme de traitement de maintenance modifié à partir de l'algorithme de traitement de maintenance, en fonction de la partition des données opérationnelles et de la paire de clés cryptographiques.

Selon une caractéristique avantageuse, le premier système est configuré pour maintenir et mettre à jour un jumeau numérique du dispositif à maintenir.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 illustre schématiquement un système pour la mise en oeuvre d'un mode de réalisation de l'invention ;
[Fig 2] la figure 2 est un synoptique des principales étapes d'une phase d'initialisation d'un procédé de maintenance selon un mode de réalisation de l'invention ; et
[Fig 3] la figure 3 est un synoptique des principales étapes d'une phase de maintenance proprement dite d'un procédé de maintenance selon un mode de réalisation de l'invention.

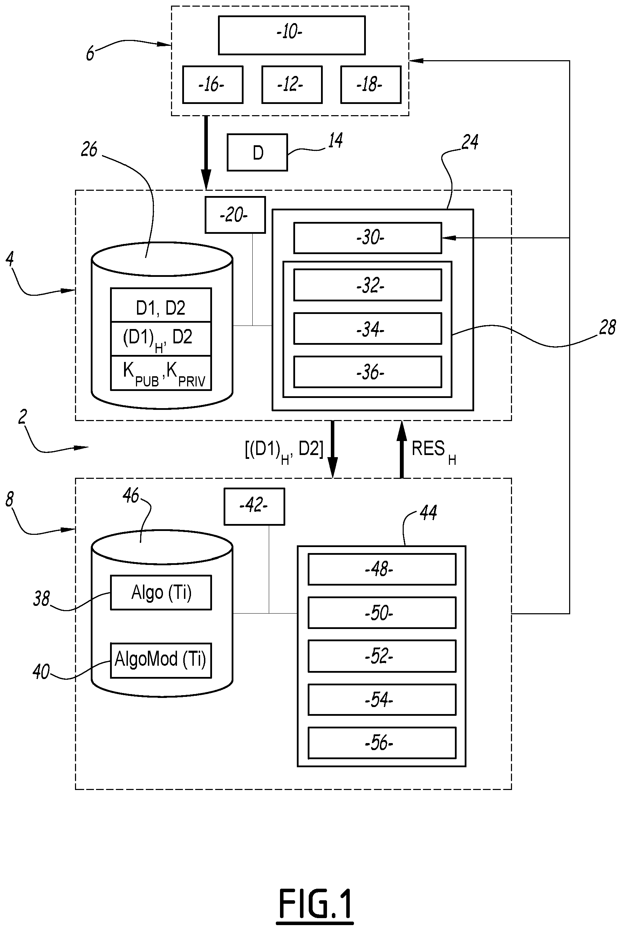

La figure 1 illustre schématiquement un système pour la mise en oeuvre d'un mode de réalisation de l'invention.

Le système 2 comporte dans cet exemple un premier système 4, dit système de protection des données opérationnelles, mis en oeuvre par un premier acteur, par exemple un exploitant d'un système 6 en exploitation, ou un tiers spécialisé à cet effet. Il comporte également un deuxième système 8, dit système de maintenance, qui est mis en oeuvre par un deuxième acteur, qui effectue des traitements de maintenance, également appelé acteur de maintenance.

Le système 6 n'est pas représenté en détail dans l'exemple de la figure 1. Par exemple le système 6 est un système de type connu, par exemple d'impression 3D.

Un dispositif 10 à maintenir est compris dans le système 6 en exploitation. Selon un mode de réalisation, le dispositif à maintenir est le système 6 lui-même.

Selon une variante, le dispositif à maintenir 10 est un sous-système, typiquement une pièce, du système 6. Le système 6 est alors un environnement d'exploitation du dispositif à maintenir.

Dans un autre exemple, le système 6 est une imprimante 3D et le dispositif à maintenir est une pièce de l'imprimante 3D. Dans un autre exemple, le système 6 est un avion ou une aile d'un avion, et le dispositif 10 à maintenir est l'avion lui-même, une aile de l'avion ou un volet hypersustentateur de cette aile, ou, respectivement, l'aile elle-même ou un volet hypersustentateur de cette aile. Ainsi, des données opérationnelles recueillies dans le système 6 qui constitue un environnement d'exploitation du dispositif à maintenir sont utiles pour la maintenance du dispositif à maintenir.

Le système 6 comporte un module de communication 12, lui permettant de communiquer avec le premier système 4 selon un protocole de communication prédéterminé, par exemple un protocole de communication radio. En particulier, le module de communication 12 est adapté à transmettre des données opérationnelles 14, relatives au système en exploitation, obtenues au cours d'un processus d'exploitation du système 6 en exploitation, par exemple ici un processus de fabrication assistée par ordinateur de pièces tridimensionnelles, ou un vol ou une série de vols d'un avion.

Des paramètres opérationnels sont prédéfinis, par exemple de température, de pression, de diagnostic de fonctionnement, des plages de valeurs de bon fonctionnement. Les données opérationnelles sont associées à l'exploitation du système en exploitation.

Les données opérationnelles sont obtenues par des capteurs 16 faisant partie du système 6 en exploitation.

Les données opérationnelles peuvent être mémorisées, dans une mémoire 18 du système 6, et au moins une partie 14 de ces données opérationnelles est transmise, au fur et à mesure de leur obtention par les capteurs 16, au premier système 4.

En variante, la transmission des données opérationnelles 14 est déclenchée par l'occurrence d'événements prédéterminés. Dans une autre variante, les données opérationnelles 14 sont transmises sur requête.

Au moins l'un des composants du système 6 parmi le module de communication 12, les capteurs 16 et la mémoire 18, peut être intégré au dispositif à maintenir 10. Alternativement, ces composants peuvent être intégrés selon toute combinaison viable à différents composants matériels du système 6.

Le premier système 4 est un système informatique, par exemple un dispositif électronique de calcul tel qu'un ordinateur ou un dispositif électronique réalisé sous forme de composants logiques programmables, tel qu'un FPGA (de l'anglais *Field-Programmable Gate Array*), ou encore sous forme de circuits intégrés dédiés, de type ASIC (de l'anglais *Application-Specific Integrated Circuit*). En variante, le premier système 4 est constitué de plusieurs tels systèmes informatiques, auxquels les composants 20 à 36 du premier système 4 sont intégrés selon toute combinaison viable.

Le premier système 4 est, dans un mode de réalisation, distant du système 6 en exploitation, et comporte un module de communication 20 adapté à communiquer avec le système en exploitation 6 et/ou avec le deuxième système 8 selon un même protocole de communication, ou plusieurs protocoles de communication distincts. En variante non représentée le premier système comporte plusieurs tels modules de communication distincts.

Le premier système 4 comporte une unité centrale de calcul 24, ou CPU, comportant un ou plusieurs processeurs électroniques, apte à exécuter des instructions de programme informatique lorsque le premier système est mis sous tension.

Le premier système 4 comporte également une unité de mémoire électronique 26 adaptée à stocker des informations, en particulier des registres. En particulier, des instructions de code exécutable aptes à mettre en oeuvre les procédés selon l'invention sont mémorisées. Les divers blocs fonctionnels du premier système 4 sont connectés via un bus de communication.

L'unité centrale de calcul 24 est prévue pour la mise en oeuvre d'un cryptosystème homomorphe ou partiellement homomorphe 28 tel que décrit en détail ci-après.

Dans le mode de réalisation illustré à la figure 1, l'unité centrale de calcul 24, en collaboration avec l'unité de mémoire électronique 26, est adaptée à mettre en oeuvre un jumeau numérique 30 du dispositif à maintenir 10.

Par exemple, le jumeau numérique est décrit par des modèles mathématiques et des algorithmes, permettant de modéliser le dispositif à maintenir, la modélisation étant mise à jour avec les données opérationnelles reçues. Ainsi, le jumeau numérique 30 est à tout moment représentatif du dispositif à maintenir 10.

Le cryptosystème 28 comprend, dans un mode de réalisation, un module 32 de calcul, pour un traitement de maintenance donné, d'un algorithme de traitement de maintenance modifié 40 à partir d'un algorithme de traitement de maintenance 38.

En effet, un traitement de maintenance, noté Ti, est défini par un algorithme de traitement de maintenance sur un ensemble D de données opérationnelles. Un tel traitement permet d'obtenir au moins une information de maintenance (notée RES) prédictive ou corrective du dispositif à maintenir.

Par exemple, le traitement de maintenance comprend des comparaisons de données opérationnelles à des seuils prédéterminés de bon fonctionnement, et une information de maintenance est toute action ou commande d'exploitation du dispositif 10 à maintenir, par exemple une consigne de modification de la valeur d'un paramètre opérationnel suite à une constatation de dépassement d'un seuil prédéterminé de bon fonctionnement. L'information de maintenance peut également être une consigne de remplacement d'une pièce du dispositif 10 à maintenir, ou de remplacement de ce dispositif lui-même, ou une alarme.

Le module 32 est adapté à partitionner, pour le traitement de maintenance Ti, l'ensemble de données opérationnelles à utiliser par l'algorithme 38 de traitement de maintenance, en un premier sous-ensemble D1 de données opérationnelles contenant des données opérationnelles confidentielles à chiffrer, et un deuxième sous-ensemble D2 de données opérationnelles non-confidentielles, utilisables en format initial sans chiffrement. La partition en sous-ensembles de données (D1, D2) est mémorisée dans l'unité de mémoire électronique 26.

Le cryptosystème 28 utilise une paire de clés, ou bi-clé, cryptographique(s), constitué(e) d'une clé publique $K_{pub}$ et d'une clé privée $K_{priv}$, associé(e) au jumeau numérique 30.

Par exemple, le cryptosystème homomorphe TFHE (pour « Fully Homomorphic Encryption over the Torus ») est utilisé. Ce cryptosystème est complètement homomorphe, c'est-à-dire de profondeur multiplicative constante quelle que soit la complexité algorithmique. Pour ce cryptosystème, la clé privée a une taille d'environ 20ko (kilo octets) et la clé publique a une taille d'environ 150ko. Un tel système est avantageux en termes d'efficacité calculatoire.

La paire de clés ($K_{pub}$, $K_{priv}$) est utilisée par le module de chiffrement 34 pour obtenir, à partir du premier sous-ensemble de données opérationnelles D1, un premier sous-ensemble de données opérationnelles chiffrées, c'est-à-dire chacune chiffrée avec la clé publique $K_{pub}$, noté $(D1)_H$. La confidentialité des données opérationnelles chiffrées est ainsi garantie, car elles ne peuvent être déchiffrées qu'en utilisant la clé privée $K_{priv}$, détenue par le premier système 4 de protection des données opérationnelles.

Le module 32 calcule un algorithme de traitement de maintenance modifié 40 qui est tel que, lorsqu'il est appliqué sur un ensemble de données formé du premier sous-ensemble de données opérationnelles chiffrées $(D1)_H$ et du deuxième sous-ensemble de données opérationnelles D2 non chiffrées, ou en clair, permet d'obtenir l'information de maintenance sous forme chiffrée (notée $RES_H$).

A des fins d'explication simplifiée, l'ensemble des données est noté : $D = \{d_1, \ldots, d_N\}$ et l'algorithme de traitement de maintenance 38 applique une fonction f sur l'ensemble D pour obtenir un résultat RES :

$$[\text{Math 1}] \qquad f(d_1, \ldots, d_N) = RES$$

Les données sont partitionnées en deux sous-ensembles, chaque sous-ensemble contenant des données opérationnelles. On note respectivement D1 le premier sous-ensemble, constitué de données opérationnelles confidentielles, et D2 le deuxième sous-ensemble, constitué de données opérationnelles non confidentielles : $D_1 = \{d_1, \ldots, d_Q\}$ de cardinal Q et $D_2 = \{d_{Q+1}, \ldots, d_N\}$ de cardinal N-Q.

Les données du premier sous-ensemble seront chiffrées par une fonction de chiffrement H pour obtenir un premier ensemble de données chiffrées :

$$[\text{Math 2}] \qquad (D_1)_H = \left\{(d_1)_H, \ldots, (d_Q)_H\right\}$$

L'algorithme de traitement de maintenance modifié applique une fonction g telle que :

$$[\text{Math 3}] \qquad g((d_1)_H, \ldots, (d_Q)_H, d_{Q+1}, \ldots, d_N) = (RES)_H$$

Le cryptosystème homomorphe ou partiellement homomorphe 28 comporte également un module 36 de déchiffrement, adapté à déchiffrer des données chiffrées en utilisant la paire de clés ($K_{pub}$, $K_{priv}$), utilisé notamment pour déchiffrer avec la clé privée $K_{priv}$ l'information de maintenance $RES_H$ chiffrée pour obtenir une information de maintenance en clair, RES.

Le deuxième système 8 est un système informatique, par exemple un dispositif électronique de calcul tel qu'un ordinateur ou un dispositif électronique réalisé sous forme de composants logiques programmables, tel qu'un FPGA (de l'anglais *Field-Programmable Gate Array)*, ou encore sous forme de circuits intégrés dédiés, de type ASIC (de l'anglais *Application-Specific Integrated Circuit*). En variante, le deuxième système 8 est constitué de plusieurs tels systèmes informatiques, auxquels les composants 38 à 56 du deuxième système 8 sont intégrés selon toute combinaison viable.

Il comporte un module de communication 42 adapté à communiquer avec le premier système 4. Le module de communication 42 est adapté à communiquer selon un protocole de communication, ou plusieurs protocoles de communication distincts. En variante non représentée le deuxième système comporte plusieurs tels modules de communication.

Le deuxième système 8 comporte une unité centrale de calcul 44, ou CPU, comportant un ou plusieurs processeurs électroniques, apte à exécuter des instructions de programme informatique lorsque le deuxième système est mis sous tension.

Le deuxième système 8 comporte également une unité de mémoire électronique 46 adaptée à stocker des informations. En particulier, des instructions de code exécutable aptes à mettre en oeuvre les procédés selon l'invention sont mémorisées. Les divers blocs fonctionnels du deuxième système 8 sont connectés via un bus de communication.

L'unité centrale de calcul 44 est adaptée à mettre en oeuvre :

- un module 48 d'obtention, en provenance du premier système 4, d'un algorithme de traitement de maintenance modifié 40 pour un traitement de maintenance Ti ;

- un module 50 d'obtention de données opérationnelles comportant un premier sous-ensemble de données chiffrées $(D1)_H$ et un deuxième sous-ensemble de données D2 non chiffrées ;
- un module 52 d'application de l'algorithme de traitement de maintenance modifié 40, en utilisant ces données opérationnelles en entrée;
- un module 54 de transmission au premier système 4 d'une information de maintenance $(RES)_H$ chiffrée ainsi obtenue ;
- un module 56 d'obtention d'un signal de fin de prise en compte d'informations de maintenance.

Le procédé de maintenance selon l'invention comporte une phase d'initialisation et une phase de maintenance proprement dite.

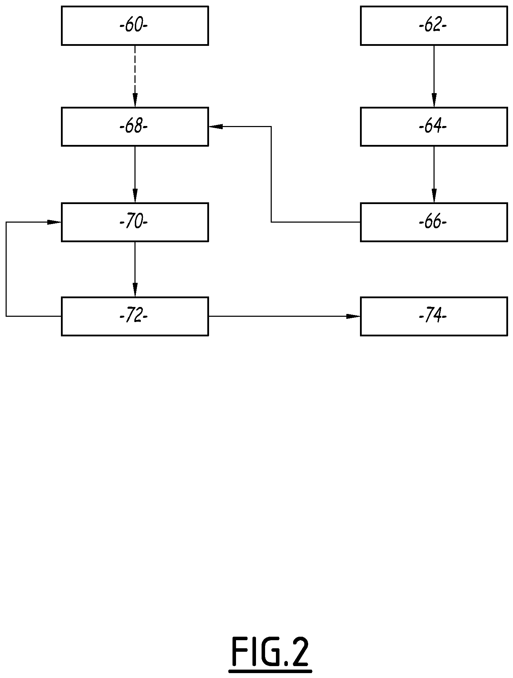

La figure 2 est un synoptique des principales étapes de la phase d'initialisation d'un procédé de maintenance selon un mode de réalisation.

Le procédé comporte des étapes réalisées par le premier système 4 de protection des données opérationnelles, et des étapes réalisées par le deuxième système 8 de maintenance.

Lors d'une première étape 60 d'initialisation du procédé de maintenance, le premier système réalise le calcul et la mémorisation d'une paire de clés cryptographiques, ou bi-clé, $(K_{pub}, K_{priv})$. Le calcul est effectué par une fonction à sens unique à brèche secrète. La paire de clés est mémorisée dans une unité de mémoire 26 du premier système.

Le deuxième système met en oeuvre une étape 62 d'obtention d'un identifiant du dispositif à maintenir et d'une adresse de son jumeau numérique, et une étape 64 d'initialisation de traitement(s) de maintenance.

L'initialisation 64 du traitement de maintenance comprend l'obtention d'un algorithme de traitement de maintenance 38, par exemple sous forme de code informatique selon un langage de programmation, ou tout autre type de description formelle d'algorithme, par exemple tout langage de spécification logique ou algébrique tel que Z, B ou VDM (Vienna Development Method). Une liste de paramètres opérationnels dont les valeurs (données opérationnelles) sont utilisées pour la mise en oeuvre de l'algorithme de traitement de maintenance 38 est mémorisée.

Afin de simplifier la description, l'initialisation d'un seul traitement de maintenance Ti est ici mise en oeuvre. Bien entendu, le procédé s'applique pour une pluralité de traitements de maintenance distincts, et les étapes du procédé de maintenance sont alors mises en oeuvre pour chacun de ces traitements de maintenance.

Des informations relatives au traitement de maintenance Ti sont transmises au premier système lors d'une étape 66. Les informations relatives au traitement de maintenance Ti comprennent :

- un identifiant du traitement de maintenance,
- la liste des paramètres opérationnels utiles (e.g. température, pression, plages de bon fonctionnement...)
- l'algorithme de traitement de maintenance 38, sous forme de code ou de pseudo-code par exemple.

Lors d'une étape 68 de réception d'informations relatives au traitement de maintenance, le premier système reçoit ces informations et les mémorise.

La liste des paramètres opérationnels reçue désigne un ensemble de données opérationnelles utiles pour la mise en oeuvre du traitement de maintenance Ti.

Ensuite le premier système met en oeuvre une partition 70 de l'ensemble de données opérationnelles en deux sous-ensembles : un premier sous-ensemble de données confidentielles, qui seront chiffrées, et un deuxième sous-ensemble de données non confidentielles, qui seront laissées en clair. La partition est mémorisée en association avec l'identifiant du traitement de maintenance Ti.

L'étape de partition 70 est suivie d'une étape 72 de calcul, par le cryptosystème, d'un algorithme de traitement de maintenance modifié 40 à partir de l'algorithme de traitement de maintenance, en fonction de la partition des données opérationnelles et d'au moins une des clés de la paire de clés du cryptosystème. L'algorithme de traitement de maintenance modifié respecte la relation [Math 3] ci-dessus.

L'algorithme de traitement de maintenance modifié 40 est transmis au deuxième système, qui obtient et mémorise l'algorithme de traitement de maintenance modifié 40 (étape 74).

Optionnellement, sur requête du deuxième système, les étapes 70 de partition et 72 de calcul d'un algorithme de traitement de maintenance modifié sont itérées par le premier système.

Dans ce cas, le deuxième système envoie par exemple une requête d'optimisation calculatoire au premier système, et le premier système itère les étapes de partition et de calcul, par exemple en diminuant le cardinal Q du premier sous-ensemble de données.

En effet, pour un cryptosystème homomorphe donné, plus le cardinal Q du premier sous-ensemble de données à utiliser sous forme chiffrée est élevé, plus la sécurité est donc élevée, et plus la complexité de l'algorithme de traitement de maintenance modifié est élevée et son efficacité calculatoire basse. La partition des données de l'algorithme de traitement de maintenance entre données confidentielles et données non confidentielles réalise ainsi un compromis entre la sécurité et l'efficacité calculatoire de l'algorithme de traitement de maintenance modifié.

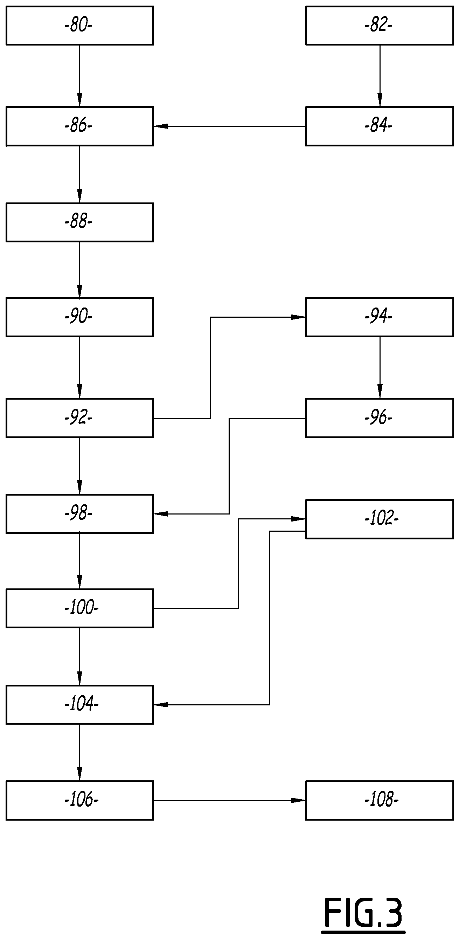

La figure 3 est un synoptique des principales étapes d'une phase de maintenance proprement dite selon un mode de réalisation.

Le procédé comporte des étapes réalisées par le premier système 4 de protection des données opérationnelles, et des étapes réalisées par le deuxième système 8 de maintenance.

De façon préalable, le premier système reçoit et mémorise (étape 80) des données opérationnelles relatives au système 6 en exploitation, lorsqu'il est actif. Dans un mode de réalisation, l'étape 80 est mise en oeuvre en tâche de fond, et continue d'être exécutée en parallèle des autres étapes décrites ci-après.

Le deuxième système reçoit lors d'une étape de réception 82 une requête de maintenance d'un dispositif à maintenir. La requête de maintenance peut être formée par un utilisateur, ou par le deuxième système suite à un évènement prédéterminé (par exemple l'écoulement d'un temps prédéterminé après la précédente opération de maintenance), ou par le premier système, par exemple par le jumeau numérique du dispositif à maintenir.

Dans un mode de réalisation, la requête de maintenance comporte également un identifiant du traitement de maintenance Ti à appliquer.

En variante, le traitement de maintenance à appliquer est préalablement mémorisé par le deuxième système en lien avec un identifiant du dispositif à maintenir.

L'étape 82 est suivie d'une étape 84 de transmission par le deuxième système 8 d'une requête d'obtention de données opérationnelles pour la maintenance du dispositif à maintenir selon le traitement de maintenance Ti, adressée au premier système.

Lors d'une étape de réception 86, le premier système reçoit la requête transmise par le deuxième système à l'étape 84, en extrait un identifiant du traitement de maintenance Ti et met en oeuvre une obtention (86) d'un ensemble de données opérationnelles utiles pour réaliser le traitement de maintenance identifié.

L'ensemble de données opérationnelles est par exemple lu dans une unité de mémoire du premier système. En variante, le premier système obtient les données opérationnelles sur requête auprès du système 6 en exploitation.

Ensuite, le premier système effectue une séparation 88 des données opérationnelles obtenues en un premier sous-ensemble de données confidentielles, et un deuxième sous-ensemble de données non confidentielles, en fonction d'informations mémorisées lors de l'étape de partition 70.

L'étape 88 est suivie d'une étape 90 de chiffrement de chacune des données opérationnelles du premier sous-ensemble, en utilisant la clé publique $K_{pub}$ de la paire de clés mémorisée, et la fonction de chiffrement du cryptosystème homomorphe.

L'ensemble de données opérationnelles protégées, comprenant le premier sous-ensemble de données opérationnelles sous forme chiffrée et le deuxième sous-ensemble de données opérationnelles en clair, est transmis au deuxième système lors d'une étape de transmission 92.

Suite à la réception de l'ensemble de données opérationnelles protégées, le deuxième système applique (étape 94) l'algorithme de traitement de maintenance modifié 40, préalablement reçu et mémorisé, à cet ensemble de données opérationnelles protégées.

Le résultat de l'algorithme de traitement de maintenance modifié, qui comprend au moins une information de maintenance prédictive ou corrective sous forme chiffrée, est envoyé au premier système lors d'une étape 96.

Le résultat sous forme chiffrée, reçu par le premier système, est déchiffré en utilisant la clé privée $K_{priv}$ et la fonction de déchiffrement du cryptosystème homomorphe à l'étape 98, et les informations de maintenance en clair ainsi obtenues sont prises en compte par le premier système à l'étape de prise en compte 100.

Le premier système transmet alors les informations de maintenance en clair ainsi obtenues au système 6 en exploitation.

Lors d'une étape 102, le système 6 en exploitation met en oeuvre les informations de maintenance reçues.

Ici, plus précisément, le système 6 en exploitation met ou non en oeuvre, sur requête de son exploitant ou automatiquement, chacune des consignes constituant les informations de maintenance reçues.

Ensuite, sur requête du système 6 en exploitation, une étape 104 de mise en oeuvre des informations de maintenance comme elles ont été mises en oeuvre par le système 6 en exploitation pour le dispositif 10 à maintenir lors de l'étape 102, est mise en oeuvre par le premier système 4 pour le jumeau numérique 30.

Plus précisément, ici, chacune des consignes constituant les informations de maintenance est mise ou non en oeuvre par le premier système 4 pour le jumeau numérique 30, selon qu'elle a été ou non mise en oeuvre par le système 6 en exploitation pour le dispositif à maintenir 10.

L'étape 104 est suivie d'une étape 106 de transmission, au deuxième système 8 par le premier système 4, d'un signal de fin de prise en compte d'informations de maintenance.

En réponse, le deuxième système 8 clôt lors d'une étape 108 le procédé de maintenance.

Les modes de réalisation de l'invention décrits ci-dessus mettent en oeuvre un cryptosystème homomorphe.

Selon une variante, il est possible, à condition que le traitement de maintenance appartienne à ce sous-ensemble, d'utiliser un cryptosystème partiellement homomorphe, c'est-à-dire homomorphe vis-à-vis d'un sous-ensemble de l'ensemble des fonctions calculables, par exemple exprimables en ne recourant qu'à des additions ou qu'à des multiplications. Dans un mode de réalisation, le cryptosystème RSA, homomorphe vis-à-vis des multiplications, est utilisé.

Avantageusement, grâce à l'invention, l'acteur de maintenance étant en capacité de réaliser sa tâche sans l'être de déchiffrer les données opérationnelles confidentielles (ce que seul le premier système 4, dont la clé privée est requise à cet effet, peut faire), n'a pas accès à l'ensemble de ces données opérationnelles et par conséquent les données opérationnelles de l'exploitant sont protégées. Toute exploitation frauduleuse de ces données est empêchée.

## Revendications

1. Procédé de maintenance assistée par ordinateur d'un dispositif à maintenir, comportant une mémorisation dans un premier système, mise en oeuvre au fur et à mesure de l'exploitation d'un système en exploitation comportant le dispositif à maintenir, de données opérationnelles associées audit système en exploitation, comportant la mise en oeuvre d'un traitement de maintenance dans un deuxième système, lesdits premier et deuxième système étant adaptés à communiquer l'un avec l'autre selon un protocole de communication, **caractérisé en ce qu'il comporte,** pour un traitement de maintenance identifié par un identifiant de traitement de maintenance à mettre en oeuvre par le deuxième système (8) en appliquant un algorithme de traitement (38) de maintenance sur un ensemble de données opérationnelles pour obtenir au moins une information de maintenance prédictive ou corrective dudit dispositif à maintenir, des étapes consistant à :

   - obtenir (74) un algorithme de traitement de maintenance modifié (40) calculé par un cryptosystème (28) homomorphe ou partiellement homomorphe, pour permettre d'obtenir, sans mettre en oeuvre d'opération cryptographique, ladite au moins une information de maintenance prédictive ou corrective sous forme chiffrée, à partir d'un ensemble de données opérationnelles protégées comportant un premier sous-ensemble de données dudit ensemble des données opérationnelles chiffrées $((D1)_H)$ par un procédé de chiffrement du cryptosystème (28) homomorphe ou partiellement homomorphe, et un deuxième sous-ensemble de données $(D_2)$ en clair dudit ensemble des données opérationnelles,
   - mettre en oeuvre (82-94) ledit algorithme de traitement de maintenance modifié (40) sur le deuxième système (8) à partir d'un premier sous-ensemble de données opérationnelles chiffrées et d'un deuxième sous-ensemble de données opérationnelles en clair obtenus du premier système (4).

2. Procédé selon la revendication 1, comportant en outre, suite à la mise en oeuvre de l'algorithme de traitement de maintenance modifié, une transmission (96) de ladite au moins une information de maintenance prédictive ou corrective sous forme chiffrée au premier système (4).

3. Procédé selon l'une des revendications 1 ou 2, dans lequel la mise en oeuvre de l'algorithme de traitement de maintenance modifié, comporte les étapes suivantes mises en oeuvre par le deuxième système (8) :

   - réception (82) d'une requête de maintenance d'un dispositif à maintenir ;
   - obtention d'un identifiant de traitement de maintenance à mettre en oeuvre,
   - formulation (84) d'une requête d'obtention de données opérationnelles du système en exploitation pour la maintenance du dispositif à maintenir selon le traitement de maintenance identifié, et envoi de ladite requête au premier système, ladite requête comprenant au moins un identifiant du traitement de maintenance à appliquer.

4. Procédé selon la revendication 3, dans lequel la mise en oeuvre de l'algorithme de traitement de maintenance modifié comporte les étapes suivantes, mises en oeuvre par le premier système (4) :

   - réception (86) d'une requête d'obtention de données opérationnelles identifiant un traitement de maintenance en provenance du deuxième système,
   - obtention (88) de l'ensemble de données opérationnelles relatives au système en exploitation utiles pour effectuer le traitement de maintenance identifié,
   - séparation dudit ensemble de données opérationnelles en un premier sous-ensemble de données $(D_1)$ confidentielles et un deuxième sous-ensemble de données $(D_2)$ non confidentielles,
   - chiffrement (90), au moyen du module de chiffrement du cryptosystème homomorphe ou partiellement homomorphe, des données du premier sous-ensemble de données,
   - transmission (92) du premier sous-ensemble de données chiffrées $((D1)_H)$ et du deuxième sous-ensemble de données $(D_2)$ en clair au deuxième système.

5. Procédé selon l'une quelconque des revendications 1 à 4, comportant une étape préalable (60) d'obtention et de mémorisation d'une paire de clés cryptographiques ($K_{pub}$, $K_{priv}$) par ledit premier système (4), à utiliser par ledit cryptosystème (28) pour effectuer un chiffrement et un déchiffrement.

6. Procédé selon la revendication 5 dans lequel l'obtention d'un algorithme de traitement de maintenance modifié, mise en oeuvre par ledit premier système (4), comporte :

- une partition (70) de l'ensemble de données opérationnelles associées au traitement de maintenance identifié en un premier sous-ensemble de données confidentielles et un deuxième sous-ensemble de données non confidentielles,
- un calcul (72) de l'algorithme de traitement de maintenance modifié (40) à partir de l'algorithme de traitement de maintenance (38), en fonction de la partition des données opérationnelles et d'au moins une clé de la paire de clés cryptographiques.

7. Procédé selon la revendication 6, dans lequel chacun desdits premier et deuxième sous-ensemble de données a un cardinal associé, le procédé comportant, suite à une requête d'optimisation calculatoire en provenance du deuxième système, une itération par le premier système (4) des étapes de partition (70) et de calcul (72) de l'algorithme de traitement de maintenance modifié, comportant lors de l'étape de partition une réduction du cardinal du premier sous-ensemble de données .

8. Procédé selon l'une quelconque des revendications 6 ou 7, comportant en outre une transmission de l'algorithme de traitement de maintenance modifié du premier système (4) au deuxième système (8).

9. Procédé selon l'une quelconque des revendications 1 à 8, dans lequel le premier système (4) est configuré pour maintenir à jour et mémoriser un jumeau numérique (30) du dispositif à maintenir.

10. Système de maintenance assistée par ordinateur d'un dispositif à maintenir, comportant un premier système adapté à mémoriser, au fur et à mesure de l'exploitation d'un système en exploitation comportant le dispositif à maintenir, de données opérationnelles associées audit système en exploitation, et un deuxième système adapté à mettre en oeuvre un traitement de maintenance, lesdits premier et deuxième système étant adaptés à communiquer l'un avec l'autre selon un protocole de communication, **caractérisé en ce qu'il comporte,** pour un traitement de maintenance identifié par un identifiant de traitement de maintenance à mettre en oeuvre par le deuxième système (8) en appliquant un algorithme de traitement de maintenance sur un ensemble de données opérationnelles pour obtenir au moins une information de maintenance prédictive ou corrective dudit dispositif à maintenir, des modules configurés pour :

- calculer (48), par un cryptosystème (28) homomorphe ou partiellement homomorphe, un algorithme de traitement de maintenance modifié pour permettre d'obtenir, sans mettre en oeuvre d'opération cryptographique, ladite au moins une information de maintenance prédictive ou corrective sous forme chiffrée, à partir d'un ensemble de données opérationnelles protégées comportant un premier sous-ensemble de données dudit ensemble des données opérationnelles chiffrées par un module de chiffrement du cryptosystème (28) homomorphe ou partiellement homomorphe, et un deuxième sous-ensemble de données en clair dudit ensemble des données opérationnelles,
- mettre en oeuvre (52) ledit algorithme de traitement de maintenance modifié sur le deuxième système à partir d'un premier sous-ensemble de données opérationnelles chiffrées et d'un deuxième sous-ensemble de données opérationnelles en clair obtenus du premier système.

11. Système selon la revendication 10, dans lequel le premier système comporte un module (32) configuré pour réaliser :

- une partition de l'ensemble de données opérationnelles associées au traitement de maintenance identifié en un premier sous-ensemble de données ($D_1$) confidentielles et un deuxième sous-ensemble de données ($D_2$) non confidentielles,
- un calcul de l'algorithme de traitement de maintenance modifié (40) à partir de l'algorithme de traitement de maintenance (38), en fonction de la partition des données opérationnelles et de la paire de clés cryptographiques.

12. Système selon l'une des revendications 10 ou 11, dans lequel le premier système (4) est configuré pour maintenir et mettre à jour un jumeau numérique (30) du dispositif à maintenir.

**Patentansprüche**

1. Verfahren zur rechnergestützten Wartung einer zu wartenden Vorrichtung, umfassend eine Speicherung, in einem ersten System umfasst, das im Laufe des Betriebs eines in Betrieb befindlichen Systems, das die zu wartende Vorrichtung umfasst, implementiert wird, von Betriebsdaten, die mit dem zu wartenden System assoziiert sind, umfassend die Durchführung einer Wartungsverarbeitung in einem zweiten System, wobei das erste und das zweite System geeignet sind, um gemäß einem Kommunikationsprotokoll miteinander zu kommunizieren, **dadurch gekennzeichnet, dass** es für eine Wartungsverarbeitung, die durch eine Wartungsverarbeitungs-ID identifiziert ist, die von dem zweiten System (8) durch Anwenden eines Wartungsverarbeitungs-Algorithmus (38) auf einen Satz von Betriebsdaten durchzuführen ist, um mindestens prädiktive oder korrektive Wartungsinformationen der zu wartenden Vorrichtung zu erlangen, Schritte umfasst, die aus Folgendem bestehen:

   - Erlangen (74) eines modifizierten Wartungsverarbeitungsalgorithmus (40), der von einem homomorphen oder teilweise homomorphen Kryptosystem (28) berechnet wird, um zu ermöglichen, ohne Durchführung einer kryptografischen Operation die mindestens einen prädiktiven oder korrigierenden Wartungsinformationen in verschlüsselter Form zu erlangen, anhand eines geschützten Betriebsdatensatzes, umfassend eine erste Teilmenge von Daten des Betriebsdatensatzes, die durch ein Verschlüsselungsverfahren des homomorphen oder teilweise homomorphen Kryptosystems (28) verschlüsselt sind ($(D1)_H$), und eine zweite Teilmenge von Daten ($D_2$) in Klartext des Betriebsdatensatzes,
   - Implementieren (82-94) des modifizierten Wartungsverarbeitungsalgorithmus (40) auf dem zweiten System (8) anhand einer ersten Teilmenge verschlüsselter Betriebsdaten und einer zweiten Teilmenge unverschlüsselter Betriebsdaten, die von dem ersten System (4) erlangt werden.

2. Verfahren nach Anspruch 1, ferner umfassend nach Implementieren des modifizierten Wartungsverarbeitungsalgorithmus eine Übertragung (96) der mindestens einen prädiktiven oder korrektiven Wartungsinformation in verschlüsselter Form an das erste System (4).

3. Verfahren nach einem der Ansprüche 1 oder 2, wobei die Implementierung des modifizierten Wartungsverarbeitungsalgorithmus die folgenden Schritte umfasst, die von dem zweiten System (8) implementiert werden:

   - Empfangen (82) einer Wartungsanforderung einer zu wartenden Vorrichtung;
   - Erlangen einer Kennung für die durchzuführende Wartungsbehandlung,
   - Formulieren (84) einer Anforderung zum Erlangen von Betriebsdaten des in Betrieb befindlichen Systems für die Wartung der Vorrichtung, die gemäß der identifizierten Wartungsbehandlung gewartet werden soll, und Senden der Anfrage an das erste System, die Anfrage umfassend mindestens eine Kennung der anzuwendenden Wartungsbehandlung.

4. Verfahren nach Anspruch 3, wobei die Implementierung des modifizierten Wartungsverarbeitungsalgorithmus die folgenden Schritte umfasst, die von dem ersten System (4) implementiert werden:

   - Empfangen (86) einer Anforderung zum Erlangen von Betriebsdaten, die eine Wartungsbehandlung identifizieren, und von dem zweiten System stammen,
   - Erlangen (88) des Satzes von Betriebsdaten, die sich auf das in Betrieb befindliche System beziehen und die für die Durchführung der identifizierten Wartungsbehandlung nützlich sind,
   - Trennen des Satzes von Betriebsdaten in einen ersten Teilsatz vertraulicher Daten ($D_1$) und einen zweiten Teilsatz nicht-vertraulicher Daten ($D_2$),
   - Verschlüsseln (90), mittels des Verschlüsselungsmoduls des homomorphen oder teilweise homomorphen Kryptosystems, der Daten des ersten Teilsatzes von Daten,
   - Übertragung (92) des ersten Teilsatzes verschlüsselter Daten ($(D1)_H$) und des zweiten Teilsatzes unverschlüsselter Daten ($D_2$) an das zweite System.

5. Verfahren nach einem der Ansprüche 1 bis 4, umfassend einen vorherigen Schritt (60) eines Erlangens und Speicherns eines Paars kryptografischer Schlüssel ($K_{öffentl}$, $K_{priv}$) durch das erste System (4), die von dem Kryptosystem (28) verwendet werden sollen, um eine Verschlüsselung und eine Entschlüsselung durchzuführen.

6. Verfahren nach Anspruch 5, wobei das Erlangen eines modifizierten Wartungsverarbeitungsalgorithmus, der von dem ersten System (4) implementiert wird, Folgendes umfasst:

- eine Partitionierung (70) des Satzes von Betriebsdaten, die mit der identifizierten Wartungsbehandlung assoziiert sind, in einen ersten Teilsatz vertraulicher Daten und einen zweiten Teilsatz nicht-vertraulicher Daten,
- eine Berechnung (72) des modifizierten Wartungsverarbeitungsalgorithmus (40) aus dem Wartungsverarbeitungsalgorithmus (38), basierend auf der Partition der Betriebsdaten und mindestens einem Schlüssel des kryptografischen Schlüsselpaars.

7. Verfahren nach Anspruch 6, wobei jeder von dem ersten und dem zweiten Teilsatz von Daten eine assoziierte Kardinalzahl aufweist, wobei das Verfahren nach einer rechnerischen Optimierungsanfrage von dem zweiten System eine Iteration des Partitions-(70) und des Berechnungsschritts (72) des modifizierten Wartungsverarbeitungsalgorithmus durch das erste System (4) umfasst, die beim Partitionsschritt eine Reduzierung des Kardinalwerts des ersten Teilsatzes von Daten umfasst.

8. Verfahren nach einem der Ansprüche 6 oder 7, ferner umfassend eine Übertragung des modifizierten Wartungsverarbeitungsalgorithmus von dem ersten System (4) zu dem zweiten System (8).

9. Verfahren nach einem der Ansprüche 1 bis 8, wobei das erste System (4) konfiguriert ist, um einen digitalen Zwilling (30) der zu wartenden Vorrichtung auf dem neuesten Stand zu halten und zu speichern.

10. Computergestütztes Wartungssystem für eine zu wartende Vorrichtung, umfassend ein erstes System, das angepasst ist, um im Zuge des Betriebs eines Betriebssystems, das die zu wartende Vorrichtung umfasst, Betriebsdaten zu speichern, die mit dem Betriebssystem assoziiert sind, und ein zweites System, das angepasst ist, um eine Wartungsverarbeitung zu implementieren, wobei das erste und das zweite System geeignet sind, um miteinander gemäß einem Kommunikationsprotokoll zu kommunizieren, **dadurch gekennzeichnet, dass es** für eine Wartungsverarbeitung, die durch eine Wartungsverarbeitungs-ID identifiziert ist, die von dem zweiten System (8) durch Anwenden eines Wartungsverarbeitungs-Algorithmus auf einen Satz von Betriebsdaten durchzuführen ist, um mindestens prädiktive oder korrektive Wartungsinformationen der zu wartenden Vorrichtung zu erlangen, Module umfasst, die zu Folgendem konfiguriert sind:

- Berechnen (48), durch ein homomorphes oder teilweise homomorphes Kryptosystem (28), eines Wartungsverarbeitungsalgorhitmus, der modifiziert ist, um zu ermöglichen, ohne Durchführung einer kryptografischen Operation die mindestens einen prädiktiven oder korrigierenden Wartungsinformationen in verschlüsselter Form zu erlangen, anhand eines geschützten Betriebsdatensatzes, umfassend eine erste Teilmenge von Daten des Betriebsdatensatzes, die durch ein Verschlüsselungsverfahren des homomorphen oder teilweise homomorphen Kryptosystems (28) verschlüsselt sind, und eine zweite Teilmenge von Daten in Klartext des Betriebsdatensatzes,
- Implementieren (52) des modifizierten Wartungsverarbeitungsalgorithmus auf dem zweiten System anhand einer ersten Teilmenge verschlüsselter Betriebsdaten und einer zweiten Teilmenge unverschlüsselter Betriebsdaten, die von dem ersten System erlangt werden.

11. System nach Anspruch 10, wobei das erste System ein Modul (32) umfasst, das konfiguriert ist, um Folgendes auszuführen:

- eine Partitionierung des Satzes von Betriebsdaten, die mit der identifizierten Wartungsbehandlung assoziiert sind, in einen ersten Teilsatz vertraulicher Daten ($D_1$) und einen zweiten Teilsatz nicht-vertraulicher Daten ($D_2$),
- eine Berechnung des modifizierten Wartungsverarbeitungsalgorithmus (40) aus dem Wartungsverarbeitungsalgorithmus (38), basierend auf der Partition der Betriebsdaten und dem kryptografischen Schlüsselpaar.

12. System nach einem der Ansprüche 10 oder 11, wobei das erste System (4) konfiguriert ist, dass es einen digitalen Zwilling (30) der zu wartenden Vorrichtung unterhält und aktualisiert.

## Claims

1. A method of computer-assisted maintenance of a device to be maintained, comprising storage in a first system, implemented progressively when in use, an operating system comprising the device to be maintained, of operational data associated with the said operating system, comprising the implementation of a maintenance process in a second system, the said first and second systems being adapted to communicate with each other according to a communication protocol **characterized in that it comprises,** for a maintenance process identified by a maintenance process identifier to be implemented by the second system (8) by applying a maintenance processing algorithm (38) to a set of operational data to obtain at least one item of predictive or corrective maintenance information for the said device to be maintained, the steps consisting in :

- obtaining (74) a modified maintenance processing algorithm (40) computed by a homomorphic or partially homomorphic cryptosystem (28), to allow obtaining, without implementing a cryptographic operation, the said at least one predictive or corrective maintenance information in encrypted form, from a set of protected operational data comprising a first subset of data of the said set of encrypted operational data ($(D1)_H$) by means of a homomorphic or partially homomorphic cryptosystem encryption method (28), and a second subset of data ($D_2$) in plain text of the said set of operational data,
- implementing (82-94) the said modified maintenance processing algorithm (40) on the second system (8) from a first subset of encrypted operational data and a second subset of plain operational data obtained from the first system (4).

2. The method according to claim 1, further comprising, following implementation of the modified maintenance processing algorithm, a transmission (96) of the said at least one predictive or corrective maintenance information in encrypted form to the first system (4).

3. The method according to one of claims 1 or 2, wherein the implementation of the modified maintenance processing algorithm, comprises the following steps implemented by the second system (8) :

- receiving (82) a maintenance request from a device to be maintained.
- obtaining a maintenance processing identifier to be implemented,
- formulating (84) a request for obtaining operational data from the operating system for the maintenance of the device to be maintained according to the identified maintenance process, and sending the said request to the first system, the said request comprising at least one identifier of the maintenance process to be applied.

4. The method according to claim 3, wherein implementing the modified maintenance processing algorithm comprises the following steps, implemented by the first system (4) :

- receiving (86) a request to obtain operational data identifying a maintenance processing method from the second system,
- obtaining (88) the set of operational data relating to the operating system useful for carrying out the identified maintenance processing method,
- separating the said set of operational data into a first subset of confidential data ($D_1$) and a second subset of non-confidential data ($D_2$)
- encryption (90), by means of the encryption module of the homomorphic or partially homomorphic cryptosystem, of the data of the first data subset,
- transmitting (92) the encrypted first data subset ($(D1)_H$) and the second plain data subset ($D_2$) to the second system.

5. The method according to any one of claims 1 to 4, comprising a prior step (60) of obtaining and storing a pair of cryptographic keys ($K_{pub}$, $K_{priv}$) by the said first system (4), to be used by the said cryptosystem (28) to perform encryption and decryption.

6. The method according to claim 5 wherein obtaining a modified maintenance processing algorithm, implemented by the said first system (4), comprises:

- a partitioning (70) of the operational data set associated with the identified maintenance processing into a first subset of confidential data and a second subset of non-confidential data,
- computing (72) the modified maintenance processing algorithm (40) from the maintenance processing algorithm (38), based on the partition of the operational data and at least one key of the cryptographic key pair.

7. The method according to claim 6, wherein each of the said first and second data subsets has an associated cardinal, the method comprising, following a computational optimization request from the second system, an iteration by the first system (4) of the partition (70) and computation (72) steps of the modified maintenance processing algorithm, comprising during the partition step a reduction of the cardinal of the first data subset.

8. The method according to any one of claims 6 or 7, further comprising a transmission of the modified maintenance processing algorithm from the first system (4) to the second system (8).

9. The method according to any one of claims 1 to 8, wherein the first system (4) is configured to maintain and store a digital twin (30) of the device to be maintained.

10. The system for computer-assisted maintenance of a device to be maintained, comprising a first system adapted to store progressively when in use, an operating system comprising the device to be maintained, operational data associated with the said operating system, and a second system adapted to implement a maintenance processing method, the said first and second systems being adapted to communicate with each other according to a communication protocol **characterized in that it comprises,** for a maintenance processing method identified by a maintenance process identifier to be implemented by the second system (8) by applying a maintenance processing algorithm to a set of operational data in order to obtain at least one item of predictive or corrective maintenance information of the said device to be maintained, modules configured to :

    - calculating (48), by means of a homomorphic or partially homomorphic cryptosystem (28), a modified maintenance processing algorithm to enable the said at least one predictive or corrective maintenance information to be obtained in encrypted form without implementing a cryptographic operation, from a protected operational data set comprising a first subset of data of the said operational data set encrypted by a homomorphic or partially homomorphic cryptosystem encryption module (28), and a second subset of plain data of the said operational data set
    - implementing (52) the said modified maintenance processing algorithm on the second system from a first subset of encrypted operational data and a second subset of plain operational data obtained from the first system.

11. The system according to claim 10, wherein the first system comprises a module (32) configured to perform :

    - a partitioning of the set of operational data associated with the identified maintenance processing method into a first subset of confidential data ($D_1$) and a second subset of non-confidential data ($D_2$),
    - computing the modified maintenance processing algorithm (40) from the maintenance processing algorithm (38), based on the partition of the operational data and the cryptographic key pair.

12. The system according to any of claims 10 or 11, wherein the first system (4) is configured to maintain and update a digital twin (30) of the device to be maintained.

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018340411 A1
- WO 2018052444 A1

**Littérature non-brevet citée dans la description**

- **WU DAZHONG et al.** Cybersecurity for digital manufacturing. *Journal of Manufacturing Systems,* 04 Avril 2018, vol. 48